# EUROPEAN PATENT APPLICATION

(11) **EP 2 677 826 A1**
(43) Date of publication of application: **25.12.2013**
(21) Application number: 12305711.9
(22) Date of filing: 21.06.2012
(51) Int. Cl.: H04W 72/04

(54) **Apparatuses, Methods and Computer Programs for an Operator Specific Scheduler, a Common Scheduler and an Adaptation Module**

(71) Applicant: Alcatel Lucent, 75007 Paris (FR)
(72) Inventor: Dötsch, Uwe, 74392 Freudental (DE); Aydin, Osman, 70569 Stuttgart (DE)
(74) Representative: 2SPL Patentanwälte

(57) **Abstract**

Embodiments relate to apparatuses, methods and computer programs for an operator specific scheduler, a common scheduler and an adaptation module. An adaptation module apparatus maps control signaling resources and data signaling resources of a mobile communication system to universal control and data resources. A common scheduler apparatus determines information on an availability of a subset of the universal control resources based on an assignment rule of an operator and based on the information on the availability of the plurality of universal control resources. An operator specific scheduler 10 allocates a universal control resource and a universal data resource to a user 12 associated with the operator based on the information on the availability of the universal control resources and the information on the availability of the universal data resources.

## Description

Embodiments of the present invention relate to mobile communication systems, in particular but not exclusively to mobile communication systems, which are shared between multiple operators.

### Background

Demands for mobile services, especially relating to data services, are steadily increasing. Mobile data devices, such as smartphones, cell phones, tablet computers, lap-tops, notebooks, etc., become more and more popular, thereby generating more and more demand for wireless data services. At the same time, expectations of users steadily increase. On the network operator side the capacity of mobile communication networks is growing accordingly, at the same time more and more operators or service providers enter the market. Hardware costs and installation costs are major contributors to the overall costs that arise to operators. In the wireless world, the improvement of the network efficiency and the reduction of costs become more and more important.

A strategy that is discussed among operators and providers is to share the resources, i.e. the installed hardware such as base stations, access points, etc., between multiple operators. In such a scenario, multiple operators would provide their services using the same network hardware. The sharing of resources can be accomplished in different ways. One possibility is to share the infrastructure of a mobile network, for example, the infrastructure established by a base station and/or the backhaul network. This can be achieved, for example, by sharing the spectrum, i.e. by assigning different parts of the bandwidth of a system to different operators. In order to enable multiple operators to share the same hardware, strategies may be needed on how the resources of a network, especially the radio resources, which are used by the subscriber software operators, are shared and assigned to the operators. Especially in high-load situations, i.e. in situations where the network capabilities are used up almost to their full extent, efficient and transparent resource assignment mechanisms are desirable.

### Summary

Embodiments are based on the finding that sharing of network resources, especially the sharing of control resources can be realized in different ways. For example, the sharing of a NodeB can be realized by using a virtualization of the NodeB. That is to say that single eNodeB hardware provides a platform, which enables the implementation of multiple virtual eNodeBs. In case of such an eNodeB, or a base station transceiver more generally, the internal components like the Central Processing Unit (CPU), memory or network interfaces, radio and backhaul, etc., would have to be virtualized or would need to support virtualization. Such a platform would enable a number of operators to own their own virtual base station transceiver or eNodeB and they may run their own operational software on this virtual eNodeB or base station transceiver.

It is a further finding of embodiments that enhanced architectural requests for future radio networks may arise from operators. Moreover, it is a finding that in order to enable a multi-operator scenario, defined and standardized interfaces may be needed in a way that virtualized software from different operators could be executed on the hardware and developed or written from different vendors. It is a further finding that in case of spectrum sharing two main interfaces may be defined where the first one may refer to a concept for allocating physical resources to scheduling, i.e. to enhance scheduler architectures for enabling multi-operator spectrum sharing or virtualization. The second interface may refer to the handling of the control channel usage.

Embodiments may therefore provide a concept for the handling of the control channel usage. For the user data scheduling and separation between two operators defined interfaces can be used. For an operator-shared control channel signaling approach in a virtualized environment, a defined standardized interface may be desirable.

Embodiments are based on the finding that new network architecture can be defined, which allows a virtualization approach in case of spectrum sharing and virtualization. Embodiments may therewith enable that different vendors can provide their software for their virtual eNodeBs having a well-defined or even standardized interface. Embodiments may further enable common usage of a control channel by all operators using the same spectrum. Embodiments may therewith provide means for an information exchange between a scheduler, which can be implemented on layer 2 or the Medium Access Control layer (MAC), and the physical layer or layer 1, which is responsible for the encoding and decoding of the control channels.

It is a further finding of embodiments that conventional architectures, especially the layered approach where one scheduler for one operator uses all the services of the physical layer can be broken up. Especially layer 2, i.e. the layer where the scheduler is located, can be differentiated or broken up into an operator-specific scheduler and a common scheduler. The common scheduler may then provide information to the operator-specific schedulers, on which resources can be used for control channel signaling and for data transmission. That is to say embodiments may provide a common scheduler, which according to operator agreements or allocation rules, distributes resources provided by a physical layer to operator-specific schedulers. The operator-specific schedulers may then comprise operator-specific implementations of a scheduler, making use of the information provided by the common scheduler, and then communicate directly with the physical layer of the system using the information provided by the common scheduler.

Embodiments provide an apparatus for an operator-specific scheduler, which is operable to receive information on an availability of a subset of universal control resources from a plurality of control resources and information on an availability of universal data resources. That is to say that the resources, for example, the radio resources, which are used by a communication system, can be made universal, i.e. represented using an abstract measure. An operator-specific scheduler can then use these universal resources, which can be universal control resources or universal data resources, to schedule users which are assigned to the operator. The apparatus for the operator-specific scheduler, which is also referred to as the operator-specific scheduler apparatus subsequently, is operable to allocate a universal control resource and a universal data resource to a user associated with the operator based on the information on the availability of the universal control resources and the information on the availability of the universal data resources.

In other words, as universal resources are treated by the operator-specific scheduler, an abstraction can take place. Said abstraction in based on the real resources and lies in the mapping of the real resources to the universal resources. The universal resources can be specified, for example, they can have a specified or standardized format, based on which implementations of operator-specific schedulers or base station transceivers can operate.

The information on the availability of the universal control resources and/or the information on the availability of the universal data resources can be received from a scheduler common to a plurality of operators. That is to say, a common scheduler may distribute or share the universal resources between one or more operator-specific schedulers. In embodiments of the operator-specific scheduler apparatus, said apparatus may be provided with the information on the available universal resources by a common scheduler. Scheduling, i.e. the assignment of universal resources to users of the operator, may then be carried out based on said universal resources. Universal resources may then be mapped or transcoded or translated onto actual or real radio resources of a mobile communication system, as it will be detailed subsequently.

In the operator-specific scheduler apparatus the allocating of the universal control resource and the universal data resource can be carried out by communicating information on the universal control resource and the universal data resource to an adaptation module. The adaptation module can be operable to map universal control resources to control signaling and universal data resources to data signaling using radio resources of a mobile communication system. That is to say that an adaptation module may perform the mapping of the universal resources to the real resources, described above. More details on the adaptation module will be provided below.

In embodiments the operator-specific scheduler can be operable to provide information on a future demand of universal control resources. That is to say that an operator-specific scheduler can, based on active services, perform a sort of prediction of future resources that may be needed. Such predictive information on future demands can then be provided to the common scheduler, which can in turn plan ahead and reach a more efficient resource or universal resource distribution among several operators. In other words, agreements or allocation rules with several operators may demand certain fairness in the system. For example, operators may be promised to receive equal shares of the bandwidth of the system, equal data rates, the same quality of service, etc. Such performance targets may be taken into account by the common scheduler, where a long-term fairness can be achieved more efficiently, the more information on a future data demand of each of the operator-specific schedulers is made available.

Moreover, it is to be noted that system limitations can also occur by an over-utilization of control channels. That is to say that there are services which require more control signaling than others. For example, if payload data transmission is carried out on shared channels, these are always associated with a control channel; the information on the control channel may tell the potential users when dedicated data is sent on the shared channel, the format of said data, modulation and encoding details of said data, etc. Therefore, the higher the amount of data, which can be transferred in one payload data packet, the less signaling overhead is required. If a certain service requires the transmission of a large number of small data packets, then the ratio of control signaling to payload signaling is a lot higher. A practical example is an e-mail client, who keeps sending requests to the server, to find out whether there are new e-mails in the mailbox. There may be a situation in which no new e-mails arrive for a long time. Still, a small amount of data is transmitted to indicate that there are no new e-mails. Moreover, these small data packets are transmitted frequently. Hence, as each of the small data packets goes along with a control signal on a control channel, the signaling overhead is high in this case.

Depending on the service mix and the traffic characteristic in the system, a system can become limited due to control channel utilization. Therefore, in embodiments the common scheduler distributes control channel resources among the operator-specific schedulers.

Embodiments further provide an apparatus for a common scheduler being operable to receive information on an availability of a plurality of universal control resources. The apparatus of the common scheduler, which is also subsequently referred to as the common scheduler apparatus, is further operable to determine information on an availability of a subset of the universal control resources based on an assignment rule of an operator and based on the information on the availability of the plurality of universal control resources. That is to say, the common scheduler may receive information on the overall availability of all universal control resources. Based on agreements or allocation rules with the operators, subsets of the overall universal control resources may be distributed to the operator-specific schedulers. One example would be to provide the same number of universal control resources to each of two operators. Since the control resources are universal, the operator-specific schedulers are enabled to schedule with universal control resources, which will later on be mapped onto real radio resources, as it will be detailed subsequently.

In embodiments the common scheduler apparatus can be operable to receive information on an availability of a plurality of universal data resources, wherein the common scheduler apparatus is further operable to determine information on an availability of a subset of the universal data resources based on an assignment rule of an operator and based on the information on the availability of the plurality of universal data resources. In other words, in embodiments the common scheduler apparatus may be in charge for universal control resources and for universal data resources. In the same manner as was described above for the control resources, the common scheduler may distribute shares, i.e. subsets of the data resources among the operator-specific schedulers.

In further embodiments, the determining of the information on the availability of the subset of the universal data resources can be further based on another assignment rule of another operator. Similarly, the determining of the information on the availability of the subset of the universal control resources can be further based on another assignment rule of another operator. That is to say that different agreements or assignment rules with dif ferent operators may determine how certain universal resources are distributed by the common scheduler, especially in a high-load situation, i.e. when a shortage occurs. It may depend on the assignment rules with the multiple operators, and on a fairness between the operators, which has been achieved in the past, which universal resources or how many of the universal resources will be assigned to which operator. In embodiments the common scheduler apparatus can be further operable to communicate information on the availability of the subset of control resources to an operator-specific scheduler.

In further embodiments, the common scheduler apparatus can be further operable to receive the information on the availability of the plurality of universal control resources from an adaptation module. As it has already been mentioned above, the adaptation module can be operable to map universal control resources to control signaling and universal data resources to data signaling using radio resources of a mobile communication system.

Embodiments further provide an apparatus for an adaptation module, which is operable to map universal control resources to control signaling radio resources of a mobile communication system. The apparatus, to which subsequently reference will also be made as adaptation module apparatus, is operable to map universal data resources to data signaling using radio resources of the mobile communication system. The adaptation module apparatus can be further operable to provide information on an availability of a plurality of universal control resources. In other words, embodiments may provide an adaptation module apparatus, which provides a mapping from actual or real radio resources as provided by a mobile communication system to the universal resources described above, i.e. to universal control resources and to universal data resources.

For example, resources provided by such a system in terms of resources for payload data transmission and resources for control signaling transmission may be grouped or gathered in the universal resources. In some embodiments there may be a one-to-one mapping between the real data or control resources and the universal data or control resources. Such a universal data or control resource may be defined in terms of an amount of data that can be transmitted, a transport format on how the data can be transported using said resource, etc. The adaptation module apparatus may therefore provide a sort of virtualization layer, which enables a communication based on universal resources towards operator-specific schedulers and towards a common scheduler, while it provides a mapping from the world of the universal resources to the world of the real resources.

The real resources or the radio resources provided by the mobile communication system may correspond to time resources, such as radio frames, sub-frames, Time Transmission Intervals (TTI), time slots, symbols, they may correspond to frequency resources, such as carriers, sub-carriers, frequency layers, sub-bands, they may correspond to code resources, such as channelization or scrambling codes, spreading codes, they may also correspond to spatial resources, such as spatial sub-channels in a Multiple-Input-Multiple-Output (MIMO) system, certain beams in a beam forming system, etc.

In embodiments the mobile communication system may, for example, correspond to one of the 3^{rd} Generation Partnership Program (3GPP)-standardized mobile communication networks, where the term mobile communication system is used synonymously to mobile communication network. The mobile communication system may correspond to, for example, a Long-Term Evolution (LTE), an LTE-Advanced (LTE-A), a Universal Mobile Telecommunication System (UMTS) or a UMTS Terrestrial Radio Access Network (UTRAN), an evolved-UTRAN (e-UTRAN), a Global System for Mobile communication (GSM) or Enhanced Data rates for GSM Evolution (EDGE) network, a GSM/EDGE Radio Access Network (GERAN), generally an Orthogonal Frequency Division Multiple Access (OFDMA) network, a Time Division Multiple Access (TDMA) network, a Frequency Division Multiple Access (FDMA) network, a Spatial Division Multiple Access (SDMA) network, etc., or mobile communication networks with different standards, for example, a Worldwide Inter-operability for Microwave Access (WIMAX) network.

In embodiments the adaptation module apparatus may be further operable to provide information on availability of a plurality of universal data resources and/or to communicate the information on the availability of the plurality of universal control and/or data resources to a common scheduler, which is operable to communicate with at least one operator-specific scheduler. As it has been described above, the adaptation module apparatus may provide information on the overall availability of all universal resources in the system to the common scheduler, which may then break down the overall resources to subsets of universal resources for provision to the operator-specific schedulers.

In further embodiments the adaptation module apparatus can be further operable to communicate payload data with an operator-specific scheduler and to map payload data received from the operator-specific scheduler onto payload data radio resources of the mobile communication system. The adaptation module apparatus can be further operable to map payload data received on payload data radio resources in the mobile communication system to universal data resources communicated with the operator-specific scheduler. Similar mapping mechanisms may apply between control resources and control data radio resources of the mobile communication system. Hence, there can be a direct communication between the adaptation module apparatus and the operator-specific scheduler. As the operator-specific scheduler receives information on which resources, be it control resources or data resources, to use from the common scheduler, the operator-specific scheduler can, based on the information received from the common scheduler, communicate the utilization of said resources directly with the adaptation module apparatus.

Embodiments further provide a method for an operator-specific scheduler. The method comprises receiving information on an availability of a subset of universal control resources from a plurality of control resources and information on an availability of universal data resources. The method further comprises allocating a universal control resource and a universal data resource to a user associated with the operator based on the information on the availability of the universal control resources and the information on the availability on the universal data resources.

Embodiments further provide a method for a common scheduler. The method comprises receiving information on an availability of a plurality of universal control resources and determining information on an availability of a subset of the universal control resources based on an assignment rule of an operator and based on the information on the availability of the plurality of universal control resources.

Embodiments further provide a method for an adaptation module. The method comprises mapping universal control resources to control signaling using radio resources of a mobile communication system. The method further comprises mapping universal data resources to data signaling using radio resources of the mobile communication system. The method further comprises providing information on an availability of the plurality of universal control resources.

Embodiments may further provide a computer-program having a program code for performing one of the methods described above when a computer program is executed on a computer or a processor.

Some embodiments comprise a digital control circuit installed within the apparatus for performing the method. Such a digital control circuit, e.g. a Digital Signal Processor (DSP), needs to be programmed accordingly. Hence, yet further embodiments also provide a computer program having a program code for performing embodiments of the method, when the computer program is executed on a computer or a digital processor.

### Brief description of the Figures

Some embodiments of apparatuses and/or methods will be described in the following by way of example only, and with reference to the accompanying figures, in which
Fig. 1 shows a block diagram of an embodiment of an operator-specific scheduler apparatus;
Fig. 2 shows a block diagram of an embodiment of a common scheduler apparatus;
Fig. 3 shows a block diagram of an embodiment of an adaptation module apparatus;
Fig. 4 shows an overview of a base station transceiver comprising embodiments;
Fig. 5 illustrates a block diagram of a flowchart of an embodiment of a method for an operator-specific scheduler;
Fig. 6 shows a block diagram of a flowchart of an embodiment of a method for a common scheduler; and
Fig. 7 shows a block diagram of a flowchart of an embodiment of a method for an adaptation module.

### Description of Embodiments

Various example embodiments will now be described more fully with reference to the accompanying drawings in which some example embodiments are illustrated. In the figures, the thicknesses of lines, layers and/or regions may be exaggerated for clarity.

Accordingly, while example embodiments are capable of various modifications and alternative forms, embodiments thereof are shown by way of example in the figures and will herein be described in detail. It should be understood, however, that there is no intent to limit example embodiments to the particular forms disclosed, but on the contrary, example embodiments are to cover all modifications, equivalents, and alternatives falling within the scope of the invention. Like numbers refer to like or similar elements throughout the description of the figures.

It will be understood that when an element is referred to as being "connected" or "coupled" to another element, it can be directly connected or coupled to the other element or intervening elements may be present. In contrast, when an element is referred to as being "directly connected" or "directly coupled" to another element, there are no intervening elements present. Other words used to describe the relationship between elements should be interpreted in a like fashion (e.g., "between" versus "directly between," "adjacent" versus "directly adjacent," etc.).

The terminology used herein is for the purpose of describing particular embodiments only and is not intended to be limiting of example embodiments. As used herein, the singular forms "a," "an" and "the" are intended to include the plural forms as well, unless the context clearly indicates otherwise. It will be further understood that the terms "comprises," "comprising," "includes" and/or "including," when used herein, specify the presence of stated features, integers, steps, operations, elements and/or components, but do not preclude the presence or addition of one or more other features, integers, steps, operations, elements, components and/or groups thereof.

Unless otherwise defined, all terms (including technical and scientific terms) used herein have the same meaning as commonly understood by one of ordinary skill in the art to which example embodiments belong. It will be further understood that terms, e.g., those defined in commonly used dictionaries, should be interpreted as having a meaning that is consistent with their meaning in the context of the relevant art and will not be interpreted in an idealized or overly formal sense unless expressly so defined herein.

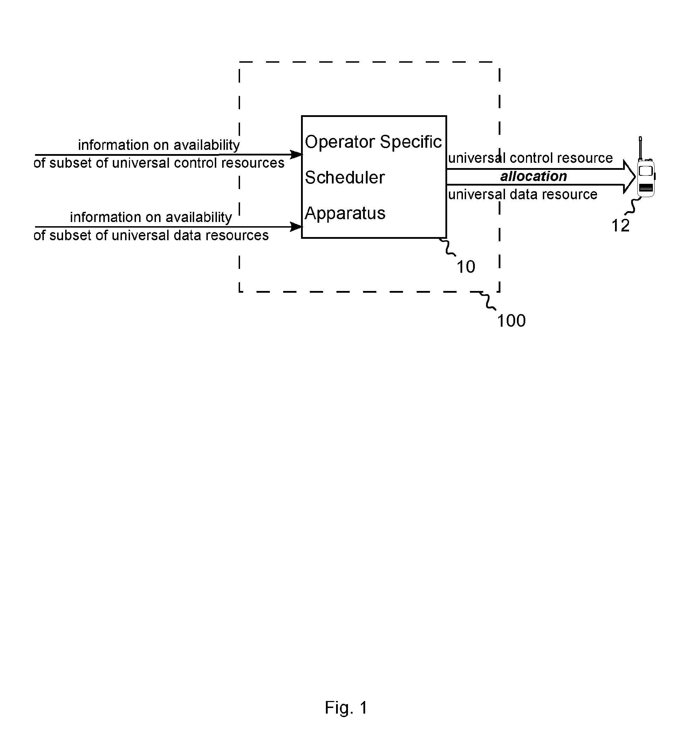

Fig. 1 illustrates a block diagram of an embodiment of an operator-specific scheduler apparatus 10. Fig. 1 further depicts an embodiment of an operator-specific scheduler 100 comprising the operator-specific scheduler apparatus 10. The operator-specific scheduler apparatus 10 is operable to receive information on an availability of a subset of universal control resources from a plurality of control resources and information on an availability of universal data resources. The operator-specific scheduler apparatus 10 is further operable to allocate a universal control resource and a universal data resource to a user 12 or mobile transceiver 12 associated with the operator based on the information on the availability of the universal control resources and the information on the availability of the universal data resources.

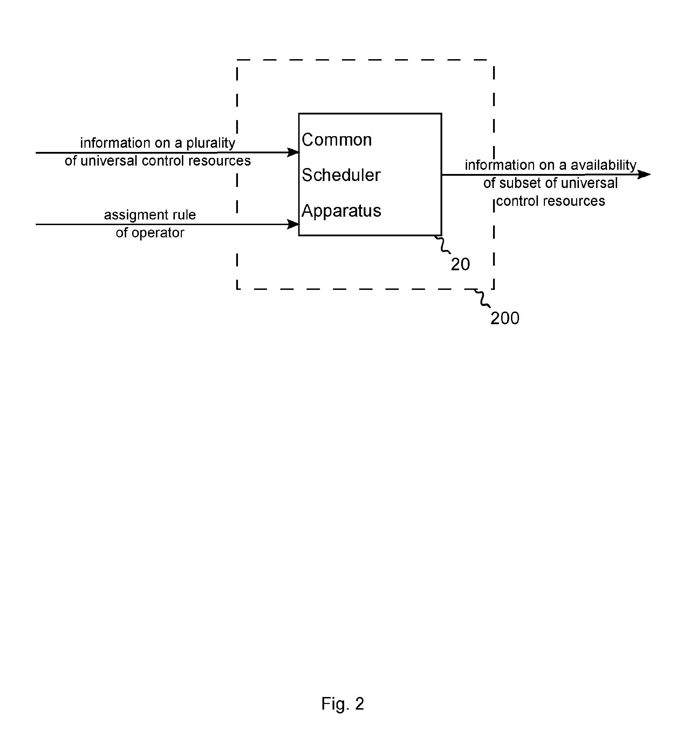

Fig. 2 illustrates a block diagram of an embodiment of a common scheduler apparatus 20. Fig. 2 also depicts an embodiment of a common scheduler 200 comprising the common scheduler apparatus 20. The common scheduler apparatus 20 is operable to receive information on an availability of a plurality of universal control resources. Furthermore, the common scheduler apparatus 20 is operable to determine information on an availability of a subset of the universal control resources based on an assignment rule of an operator and based on the information on the availability of the plurality of universal control resources.

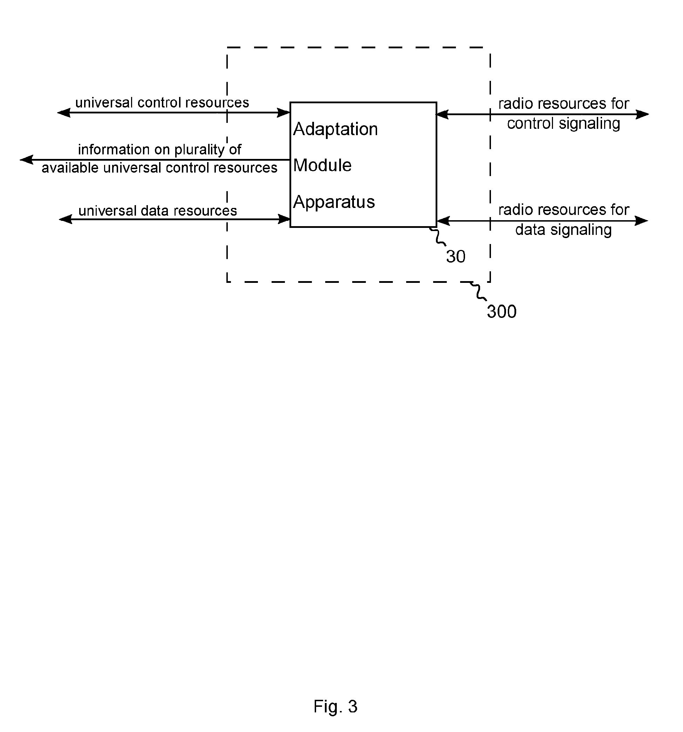

Fig. 3 illustrates a block diagram of an embodiment of an adaptation module apparatus 30. Fig. 3 further depicts an embodiment of an adaptation module 300 comprising the adaptation module apparatus 30. The adaptation module apparatus 30 is operable to map universal control resources to control signaling using radio resources of a mobile communication system. The adaptation module apparatus 30 is further operable to map universal data resources to data signaling using radio resources of the mobile communication system. Moreover, the adaptation module apparatus 30 is operable to provide information on an availability of a plurality of universal control resources.

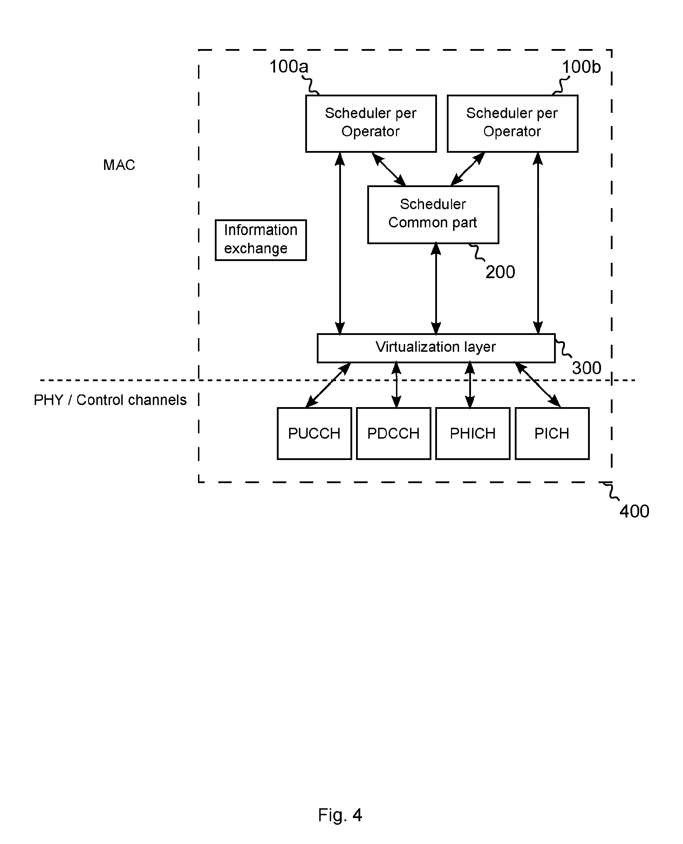

Fig. 4 illustrates an embodiment of a base station transceiver 400 comprising two operator-specific schedulers 100a and 100b, which both comprise one of the operator-specific scheduler apparatuses 10 described above. Moreover, Fig. 4 illustrates a common scheduler 200, comprising the common scheduler apparatus 20, described above, which is also comprised in the base station transceiver 400. Furthermore, the base station transceiver 400 comprises an adaptation module 300 to which reference is also made as virtualization layer 300, comprising the adaptation module apparatus 30 described above. Fig. 4 further illustrates the protocol layers, i.e. the Medium Access Control (MAC) layer at the top and the PHYsical layer (PHY) with its control channels at the bottom. The control channels are here given for the example of an LTE or an LTE-A mobile communication network. The control channels shown in Fig. 4 are the Physical Uplink Control CHannel (PUCCH), the Physical Downlink Control CHannel (PDCCH), the Physical Hybrid Automatic Repeat reQuest (ARQ) Indicator CHannel (PHICH), and the Paging Indicator CHannel (PICH).

Fig. 4 further provides an overview of the different interfaces between the MAC-scheduler entities and the control channel part of the physical layer. The present embodiment may further point out that in LTE, a spectrum sharing is only possible if the information exchange between the scheduler entities 100a, 100b, 200, 300 and the control channel is defined. In embodiments this information exchange may comprise an amount of data, and amount of resources, format information, a port, a position or label of free and used control channels and their subgroups. To be more specific, reference is made firstly to the operator-specific schedulers 100a and 100b. The arrows given in Fig. 4 indicate the respective information exchanges between the entities. In the embodiment the information on the availability of the universal control resources and/or the information on the availability of the universal data resources are received from the common scheduler 200. As it is indicated in Fig. 4, the common scheduler 200 is common to both operator-specific schedulers 100a and 100b.

As further indicated in Fig. 4, the allocating of the universal control resource and the universal data resource is carried out by communicating information on the universal control resource and the universal data resource to the adaptation module 300, which is operable to map the universal control resources to control signaling and the universal data resources to data signaling using the radio resources of the mobile communication system. The operator-specific schedulers 100a and 100b schedule their associated users according to the operator-specific rules and policies. For example, the allocation rules for the universal resources may depend on the user's quality of service (QOS) requirements and on the respective business model of the operators. The actual scheduling rules of the operator-specific schedulers 100a and 100b may depend on the input received from the common scheduler 200.

In the common scheduler 200 the common scheduler apparatus 20 is operable to communicate the information on the availability of the subset of universal control resources to the operator-specific schedulers 100a and 100b. For example, the availability and usage characteristics of control signaling channels can be communicated, for example in terms of time periods, formats, etc. According to the respective scheduling decision the operator-specific schedulers 100a and 100b can feed back information to the common scheduler 200. Hence, the operator-specific scheduling apparatus 10 is operable to provide information on a future demand of universal control resources to the common scheduler 200. This information may refer to foreseen usage of control signaling channels, which are available or have been made available to the operator-specific schedulers 100a and 100b. This feedback information can be formatted in different ways. For example, the feedback information can be attached per flow IDentification (ID) to a specific user data to be scheduled, it could be sequentially attached or it can be multiplexed to user data.

The common scheduler apparatus 20 is operable to receive information on an availability of a plurality of universal data resources. The common scheduler apparatus is further operable to determine information on an availability of a subset of the universal data resources based on an assignment rule of an operator and based on the information on the availability of the plurality of universal data resources. Moreover, the determining of the information on the availability of the subset of the universal control resources is further based on another assignment rule of the other operator, hence the two assignment rules are provided by the operator-specific schedulers 100a and 100b. Moreover, the common scheduler apparatus 20 is further operable to communicate the information on the availability of the subset of control resources to the operator-specific schedulers 100a and 100b, as it has already been described above.

As it is shown in Fig. 4, the common scheduler apparatus 20 is further operable to receive the information on the availability of the plurality of universal control resources from the adaptation module 300.

The common scheduler 200 can therefore be exactly aware of the resources regarding their usage ratio, the absolute availability of a certain universal resource, etc. This knowledge can be applied to data and also to control signaling channels, universal resources therefor, respectively. The common scheduler 200 may redefine or reassign universal control resources based on feedback of used control signaling channels from all operator-specific schedulers 100a and 100b. The common scheduler 200 may be operable to determine the still available control signaling channels and may then redefine or reassign control signaling or universal control resources to achieve higher performances or at least to improve the efficiency of the resource utilization, which can be applied to data and control channels. According to the availability and fairness criteria, which were agreed before with the respective operators, i.e. between the sharing parties, the common scheduler 200 may forward available resource capacity information to the operator-specific schedulers 100a and 100b, as part of the information on the universal control and/or data resources. The universal control resources may correspond to a control signal channel resource availability information, which is transferred from the common scheduler 200 to the respective operator-specific schedulers 100a and 100b.

In the embodiment depicted in Fig. 4, the adaptation module apparatus 30 is further operable to provide information on availability of a plurality of universal data resources and/or being further operable to communicate the information on the availability of the plurality of universal control resources to the common scheduler 200, which is operable to communicate with the operator-specific schedulers 100a and 100b.

Moreover, the adaptation module apparatus 30 is further operable to communicate payload data with the operator-specific schedulers 100a and 100b and to map the payload data received from the operator-specific schedulers 100a and 100b onto payload data radio resources of the mobile communication system. In a similar way, the adaptation module apparatus 30 is operable to map payload data received on payload data radio resources in the mobile communication system to universal data resources communicated with the operator-specific schedulers 100a and 100b. The same considerations apply to the control signaling. That is to say, the adaptation module apparatus 30 is further operable to map control data received from the operator-specific schedulers 100a and 100b onto control radio resources of the mobile communication system, such as the control channel. Moreover, the adaptation module apparatus 30 is operable to map control data received on control data radio resources in the mobile communication system to universal control resources communicated with the operator-specific schedulers 100a and 100b.

In the embodiment depicted in Fig. 4, the adaptation module 300 may correspond to a virtualization layer, which transforms the exact Radio Access Technology (RAT) depending on the specific definitions of its resources into abstract or universal resource definitions and formats. The virtualization layer 300 in Fig. 4, enables to set up virtualized base stations or eNodeB and functional instances per operator, as, for example, the operator-specific schedulers 100a and 100b. For example, control signaling channel resources, as they are defined in 3GPP for the specific RAT, as for example in LTE, the PUCCH IDs and formats, can be presented in an abstract format or an universal format, to the virtualized eNodeB instances, i.e. to the operator-specific schedulers 100a and 100b. The virtualization layer 300 exchanges the above-described information with the common scheduler 200 and the operator-specific schedulers 100a and 100b, and carries out the mapping of the universal control resources to the actual radio resources of the control channels of the mobile communication system, e.g. LTE.

It is pointed out that the embodiment in Fig. 4 shows that with the help of the information exchange between the respective entities, the individual schedulers, in particular the operator-specific schedulers can appropriately act based on the universal resources. For example, an entity within the virtualization layer 300, which is processing the PUCCH, should know to which virtual eNodeB the information about the Hybrid ARQ (H-ARQ) feedback should be forwarded. Also, the information about acknowledgements (ACK)/non-acknowledgements (NACK) for the PHICH is assigned to each virtualized MAC. As it has been explained above, in embodiments the virtualization layer 300 above the control channels may be specified to further separate the physical layer from the MAC layer and to enhance the eNodeB virtualization from the common control channel point of view. In other words, the operator-specific schedulers 100a and 100b as depicted in Fig. 4 may correspond to virtual eNodeB implementations of different operators in further embodiments.

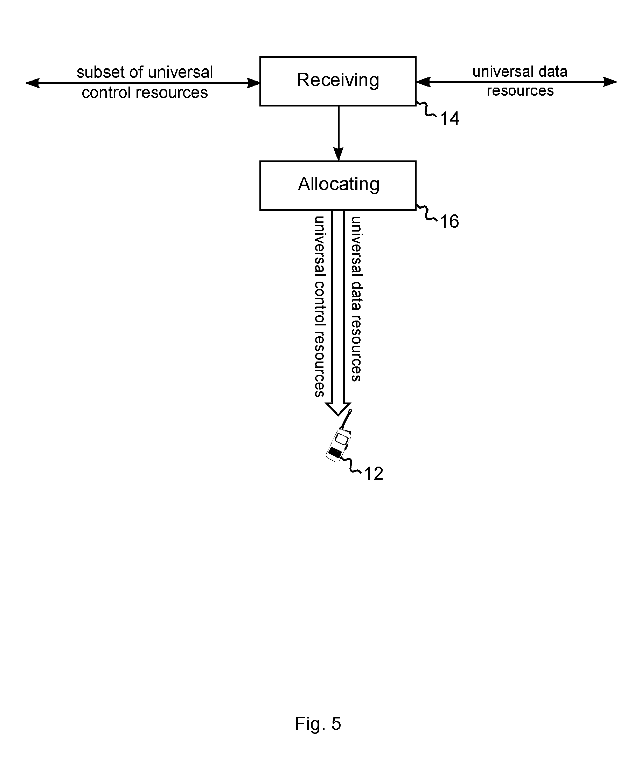

Fig. 5 illustrates a block diagram of a flowchart of an embodiment of a method for an operator-specific scheduler 100, 100a, 100b. The method comprises a step of receiving 14 information on an availability of a subset of universal control resources from a plurality of control resources and information on an availability of universal data resources. The method further comprises a step of allocating 16 a universal control resource and a universal data resource to a user 12 associated with the operator based on the information on the availability of the universal control resources and the information on the availability of the universal data resources.

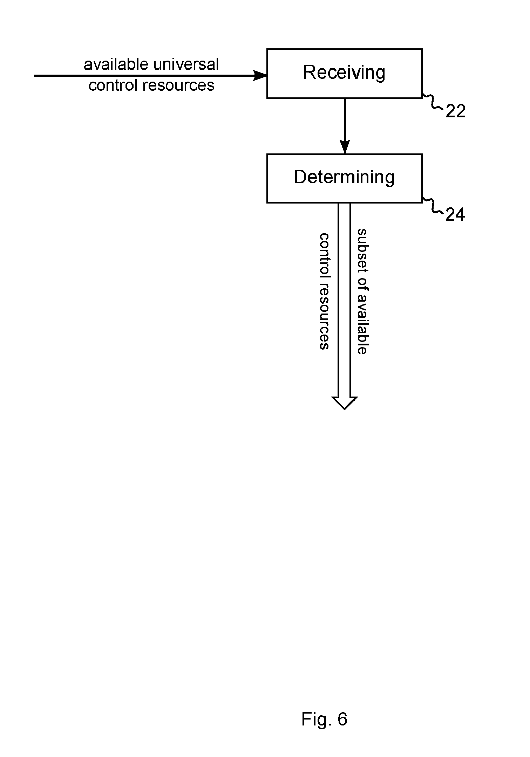

Fig. 6 illustrates a block diagram of a flowchart of an embodiment of a method for a common scheduler 200. The method comprises a step of receiving 22 information on an availability of a plurality of universal control resources. The method further comprises a step of determining 24 information on an availability of a subset of the universal control resources based on an assignment rule of an operator and based on the information on the availability of the plurality of universal control resources.

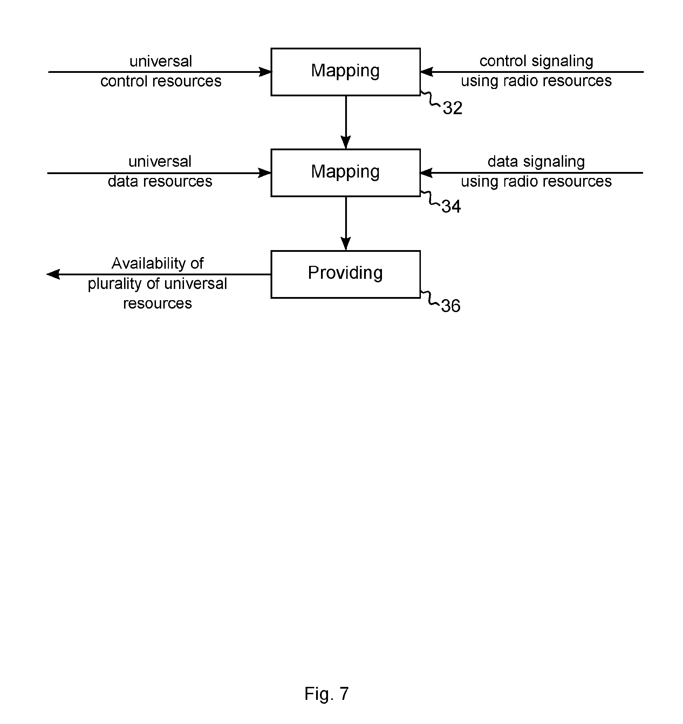

Fig. 7 illustrates a block diagram of a flowchart of an embodiment of a method for an adaptation module 300. The method comprises a step of mapping 32 universal control resources to control signaling using radio resources of a mobile communication system. The method further comprises a step of mapping 34 universal data resources to data signaling using radio resources of the mobile communication system. Moreover, the method comprises a step of providing 36 information on an availability of a plurality of universal control resources.

Moreover, embodiments provide a computer program for performing one of the above methods, when the computer program is executed on a computer or processor or a programmable hardware component.

Embodiments may provide the advantage that a sharing and virtualization can be enabled for future mobile networks. Embodiments may provide a concept for a distribution of common resources, as, for example, universal resources for control channels, can be distributed and shared between sharing mobile network operators, for example, between their implementations of virtual base station transceivers. Moreover, embodiments may enable different vendors to provide software for virtualized base stations, as embodiments may provide a universal interface. With the definition of universal interfaces different vendors can provide software for different operators, which may create and allow for new business and network planning strategies. Moreover, embodiments may enable spectrum sharing for a new entrance into the market. Embodiments may make spectrum sharing scenarios more effective, as embodiments may enable a complete virtualized approach also for the control channel. New entrants, such as operators with new services, machine-to-machine services, movie studios, gaming console providers, etc., can therefore use their own implementations on virtual NodeBs to provide mobile services.

The description and drawings merely illustrate the principles of the invention. It will thus be appreciated that those skilled in the art will be able to devise various arrangements that, although not explicitly described or shown herein, embody the principles of the invention and are included within its spirit and scope. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

Functional blocks denoted as "means for ..." (performing a certain function) shall be understood as functional blocks comprising circuitry that is adapted for performing a certain function, respectively. Hence, a "means for s.th." may as well be understood as a "means being adapted or suited for s.th.". A means being adapted for performing a certain function does, hence, not imply that such means necessarily is performing said function (at a given time instant).

Functions of various elements shown in the figures, including any functional blocks may be provided through the use of dedicated hardware, as e.g. a processor, as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and nonvolatile storage. Other hardware, conventional and/or custom, may also be included.

It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

Furthermore, the following claims are hereby incorporated into the Detailed Description, where each claim may stand on its own as a separate embodiment. While each claim may stand on its own as a separate embodiment, it is to be noted that - although a dependent claim may refer in the claims to a specific combination with one or more other claims - other embodiments may also include a combination of the dependent claim with the subject matter of each other dependent claim. Such combinations are proposed herein unless it is stated that a specific combination is not intended. Furthermore, it is intended to include also features of a claim to any other independent claim even if this claim is not directly made dependent to the independent claim.

It is further to be noted that methods disclosed in the specification or in the claims may be implemented by a device having means for performing each of the respective steps of these methods.

Further, it is to be understood that the disclosure of multiple steps or functions disclosed in the specification or claims may not be construed as to be within the specific order. Therefore, the disclosure of multiple steps or functions will not limit these to a particular order unless such steps or functions are not interchangeable for technical reasons. Furthermore, in some embodiments a single step may include or may be broken into multiple sub steps. Such sub steps may be included and part of the disclosure of this single step unless explicitly excluded.

## Claims

1. An apparatus (10) for an operator specific scheduler (100), being operable to receive information on an availability of a subset of universal control resources from a plurality of control resources and information on an availability of universal data resources, wherein the apparatus (10) is further operable to allocate a universal control resource and a universal data resource to a user (12) associated with the operator based on the information on the availability of the universal control resources and the information on the availability of the universal data resources.

2. The apparatus (10) of claim 1, wherein the information on the availability of the universal control resources and/or the information on the availability of the universal data resources are received from a common scheduler (200) to a plurality of operators.

3. The apparatus (10) of claim 1, wherein the allocating of the universal control resource and the universal data resource is carried out by communicating information on the universal control resource and the universal data resource to an adaptation module (300), which is operable to map universal control resources to control signaling and universal data resources to data signaling using radio resources of a mobile communication system.

4. The apparatus (10) of claim 1, being operable to provide information on a future demand of universal control resources.

5. An apparatus (20) for a common scheduler (200), being operable to receive information on an availability of a plurality of universal control resources, wherein the apparatus (20) is further operable to determine information on an availability of a subset of the universal control resources based on an assignment rule of an operator and based on the information on the availability of the plurality of universal control resources.

6. The apparatus (20) of claim 5, being further operable to receive information on an availability of a plurality of universal data resources, wherein the apparatus (20) is further operable to determine information on an availability of a subset of the universal data resources based on an assignment rule of an operator and based on the information on the availability of the plurality of universal data resources.

7. The apparatus (20) of claim 5, wherein the determining of the information on the availability of the subset of the universal control resources is further based on another assignment rule of another operator and wherein the apparatus (20) is further operable to communicate the information on the availability of the subset of control resources to an operator specific scheduler (100), and/or wherein the apparatus (20) is further operable to receive the information on the availability of the plurality of universal control resources from an adaptation module (300), which is operable to map universal control resources to control signaling and universal data resources to data signaling using radio resources of a mobile communication system.

8. An apparatus (30) for an adaptation module (300), which is operable to map universal control resources to control signaling using radio resources of a mobile communication system and to map universal data resources to data signaling using radio resources of the mobile communication system, wherein the apparatus (30) is further operable to provide information on an availability of a plurality of universal control resources.

9. The apparatus (30) of claim 8, being further operable to provide information on the availability of a plurality of universal data resources and/or being further operable to communicate the information on the availability of the plurality of universal control resources to a common scheduler (200), which is operable to communicate with at least one operator specific scheduler (100a;100b).

10. The apparatus (30) of claim 8, being further operable to communicate payload data with an operator specific scheduler and to map payload data received from the operator specific scheduler onto payload data radio resources of the mobile communication system, and to map payload data received on payload data radio resources in the mobile communication system to universal data resources communicated with the operator specific scheduler.

11. A base station transceiver comprising an operator specific scheduler apparatus 10 according to claim 1, a common scheduler apparatus 20 according to claim 5, or an adaptation module apparatus 30 according to claim 8.

12. A method for an operator specific scheduler (100), the method comprising receiving (14) information on an availability of a subset of universal control resources from a plurality of control resources and information on an availability of universal data resources; and
allocating (16) a universal control resource and a universal data resource to a user (12) associated with the operator based on the information on the availability of the universal control resources and the information on the availability of the universal data resources.

13. A method for a common scheduler (200), the method comprising receiving (22) information on an availability of a plurality of universal control resources; and
determining (24) information on an availability of a subset of the universal control resources based on an assignment rule of an operator and based on the information on the availability of the plurality of universal control resources.

14. A method for an adaptation module (300), the method comprising mapping (32) universal control resources to control signaling using radio resources of a mobile communication system;
mapping (34) universal data resources to data signaling using radio resources of the mobile communication system; and
providing (36) information on an availability of a plurality of universal control resources.

15. A computer program having a program code for performing one of the methods of claims 12, 13, or 14, when the computer program is executed on a computer or processor.
